# EUROPÄISCHE PATENTANMELDUNG

(11) **EP 3 926 154 A1**
(43) Veröffentlichungstag der Anmeldung: **22.12.2021**
(21) Anmeldenummer: 20180930.8
(22) Anmeldetag: 18.06.2020
(51) Int. Cl.: F02B 25/04, F02F 1/22, F02B 69/04

(54) **LÄNGSGESPÜLTER GROSSMOTOR**

(71) Anmelder: Winterthur Gas & Diesel AG, 8401 Winterthur (CH)
(72) Erfinder: Räss, Konrad, 8457 Humlikon (CH)
(74) Vertreter: IPS Irsch AG

(57) **Zusammenfassung**

Es wird ein längsgespülter Kreuzkopf-Grossmotor vorgeschlagen, mit einer Mehrzahl von Zylindern (10), von denen jeder einen Zylinderliner (5) umfasst, mit einer Zylindersektion (4), die durch einen Boden (3) begrenzt wird, und in welcher die Zylinderliner (5) in einer longitudinalen Richtung (A) nebeneinander angeordnet sind, wobei sich jeder Zylinderliner (5) jeweils von einem ersten Ende (51), welches dem Boden (3) zugewandt ist, bis zu einem zweiten Ende erstreckt, welches einem Brennraum des Zylinders (10) zugewandt ist, wobei in jedem Zylinderliner (5) jeweils ein hin und her bewegbar angeordneter Kolben vorgesehen ist, wobei benachbart zu dem ersten Ende (51) jedes Zylinderliners (5) jeweils Spülluftöffnungen (7) in dem Zylinderliner (5) vorgesehen sind, durch welche Spülluft aus einem Spülluftreceiver (8) in den jeweiligen Zylinderliner (5) einströmen kann, wobei für jeden Zylinder (10) jeweils ein Kolbenunterraum (11) vorgesehen ist, der einerseits von einer Unterseite des Kolbens des Zylinders (10) begrenzt wird, und andererseits von dem Boden (3) der Zylindersektion (4), wobei in der longitudinalen Richtung (A) zwischen zwei benachbarten Kolbenunterräumen (11) jeweils eine Trennwand (12) vorgesehen ist, welche diese beiden Kolbenunterräume (11) voneinander abgrenzt, und wobei jeder Kolbenunterraum (11) über eine Strömungsverbindung (13) mit dem Spülluftreceiver (8) verbunden ist.

## Beschreibung

Die Erfindung betrifft einen längsgespülten Grossmotor gemäss dem Oberbegriff des unabhängigen Patentanspruchs der jeweiligen Kategorie.

Grossmotoren, die als Zweitakt- oder als Viertakt-Maschinen ausgestaltet sein können, beispielsweise als längsgespülte Zweitakt-Grossdieselmotoren, werden häufig als Antriebsaggregate für Schiffe oder auch im stationären Betrieb, z.B. zum Antrieb grosser Generatoren zur Erzeugung elektrischer Energie eingesetzt. Dabei laufen die Motoren in der Regel über beträchtliche Zeiträume im Dauerbetrieb, was hohe Anforderungen an die Betriebssicherheit und die Verfügbarkeit stellt. Daher sind für den Betreiber insbesondere lange Wartungsintervalle, geringer Verschleiss und ein wirtschaftlicher Umgang mit den Betriebsstoffen zentrale Kriterien. Grossmotoren haben typischerweise Zylinder, deren Innendurchmesser (Bohrung) mindestens 200 mm beträgt. Heutzutage werden Grossmotoren mit einer Bohrung von bis zu 960 mm oder sogar noch mehr eingesetzt.

Ein weiterer wichtiger Punkt ist seit einigen Jahren mit zunehmender Bedeutung die Energieeffizienz sowie die Qualität der Abgase, insbesondere die Stickoxid Konzentration in den Abgasen oder die Belastung mit Schwefel. Ein weiteres Problem stellen unverbrannte Kohlenwasserstoffe dar, beispielsweise der Methan-Schlupf.

Hier werden die rechtlichen Vorgaben und Grenzwerte für die entsprechenden Abgasgrenzwerte immer weiter verschärft. Das hat insbesondere bei Zweitakt-Grossdieselmotoren zur Folge, dass die Verbrennung des klassischen, mit Schadstoffen hoch belasteten Schweröls, aber auch die Verbrennung von Dieselöl oder anderen Brennstoffen, beispielsweise Erdgas, problematischer wird, weil die Einhaltung der Abgasgrenzwerte immer schwieriger, technisch aufwendiger und damit teurer wird.

Unter den Aspekten des wirtschaftlichen und effizienten Betriebs, der Einhaltung von Abgasgrenzwerten und der Verfügbarkeit von Ressourcen sucht man daher nach Alternativen zum klassischerweise als Brennstoff für Grossmotoren verwendeten Schweröl. Dabei werden sowohl flüssige Brennstoffe eingesetzt, also Brennstoffe, die im flüssigen Zustand in den Brennraum eingebracht werden, als auch gasförmige Brennstoffe, also Brennstoffe, die im gasförmigen Zustand in den Brennraum eingebracht werden.

Beispiele für flüssige Brennstoffe als bekannte Alternativen zum Schweröl sind andere schwere Kohlenwasserstoffe, die insbesondere als Rückstände bei der Raffinerie von Erdöl übrigbleiben, Alkohole, insbesondere Methanol oder Ethanol, Benzin, Diesel, oder auch Emulsionen oder Suspensionen. So ist es z. B. bekannt, die als MSAR (Multiphase Superfine Atomised Residue) bezeichneten Emulsionen als Brennstoff zu verwenden. Dies sind im Wesentlichen Emulsionen aus einem schweren Kohlenwasserstoff, z. B. Bitumen, Schweröl oder ähnliches, und Wasser, die in speziellen Verfahren hergestellt werden. Eine bekannte Suspension ist diejenige aus Kohlenstaub und Wasser, die ebenfalls als Brennstoff für Grossmotoren eingesetzt wird. Als gasförmige Brennstoffe sind beispielsweise Erdgases wie LNG (liquefied natural gas) bekannt.

Eine ebenfalls bekannte Alternative zum reinen Betrieb mit Schweröl ist es, Grossmotoren so auszugestalten, dass sie mit zwei oder noch mehr unterschiedlichen Brennstoffen betrieben werden können, wobei der Motor je nach Betriebssituation oder Umgebung entweder mit dem einen Brennstoff oder mit dem anderen Brennstoff betrieben wird. Ein solcher Grossmotor, der auch als Multi-Fuel Grossmotor bezeichnet wird, kann während des Betriebs von einem ersten Modus, in welchem ein erster Brennstoff verbrannt wird, in einen zweiten Modus, in welchem ein zweiter Brennstoff verbrannt wird, umgeschaltet werden und umgekehrt.

Eine bekannte Ausgestaltung eines Grossmotors, der mit zwei unterschiedlichen Brennstoffen betrieben werden kann, ist der Motorentyp, für den heutzutage der Begriff "Dual-Fuel Motor" gebräuchlich ist. Diese Motoren sind einerseits in einem Gasmodus betreibbar, in welchem ein gasförmiger Brennstoff, z.B. Erdgas oder Methan, zur Verbrennung in den Brennraum eingebracht wird, und andererseits in einem Flüssigmodus, in welchem ein flüssiger Brennstoff wie Schweröl oder ein anderer flüssiger Brennstoff in demselben Motor verbrannt werden können. Diese Grossmotoren können dabei sowohl Zweitakt- als auch Viertaktmotoren sein, insbesondere auch längsgespülte Zweitakt-Grossdieselmotoren.

Es sind auch solche Grossmotoren bekannt, die mit zwei unterschiedlichen flüssigen Brennstoffen betrieben werden können, wobei dabei üblicherweise beide Brennstoffe vorrätig sind, sodass der Motor auch während des Betriebs entweder mit dem ersten oder mit dem zweiten Brennstoff betreibbar ist. Auch sind Ausführungsformen bekannt, bei denen beide Brennstoffe im gleichen Arbeitszyklus des Grossmotors in den Brennraum eingebracht werden.

Grossmotoren, die mit mindestens zwei oder auch mehr verschiedenen flüssigen oder gasförmigen Brennstoffen betrieben werden können, werden häufig, je nach aktuell verwendetem Brennstoff in unterschiedlichen Betriebsmodi betrieben. In dem häufig als Dieselbetrieb bezeichneten Betriebsmodus erfolgt die Verbrennung des Brennstoffs in der Regel nach dem Prinzip der Kompressionszündung oder Selbstzündung des Brennstoffs. In dem häufig als Ottobetrieb bezeichneten Modus erfolgt die Verbrennung durch die Fremdzündung eines zündfähigen Brennstoff-Luft-Gemisches. Diese Fremdzündung kann beispielsweise durch einen elektrischen Funken erfolgen, z. B. mit einer Zündkerze, oder auch durch die Selbstzündung einer kleinen eingespritzten Brennstoffmenge, welche dann die Fremdzündung eines anderen Brennstoffs bewirkt. Bei den oben genannten Dual-Fuel Motoren ist es beispielsweise für den Gasmodus bekannt, das Gas im gasförmigen Zustand mit der Spülluft zu vermischen, um so im Brennraum des Zylinders ein zündfähiges Gemisch zu erzeugen. Bei diesem Niederdruckverfahren erfolgt dann die Zündung des Gemisches im Zylinder üblicherweise, indem im richtigen Moment eine kleine Menge flüssiger Brennstoff in den Brennraum des Zylinders oder in eine Vorkammer eingespritzt wird, die dann zur Zündung des Luft-Gas-Gemisches führt.

Ferner sind auch Mischformen aus dem Ottobetrieb und dem Dieselbetrieb bekannt.

Weiterhin sind Grossmotoren bekannt, die als Gasmotoren ausgestaltet sind. Diese Gasmotoren sind nur für den reinen Gasbetrieb ausgestaltet. Beispielsweise kann ein Gasmotor so ausgestaltet sein, dass sein Betrieb dem Betrieb einen Dual-Fuel Motors im Gasmodus entspricht. Gasmotoren arbeiten üblicherweise im Ottobetrieb. Ein bevorzugter Brennstoff für Gasmotoren ist beispielsweise Erdgas.

Im Rahmen dieser Anmeldung sind mit dem Begriff "Grossdieselmotor" solche Motoren gemeint, die zumindest in einem Dieselbetrieb betrieben werden können. Insbesondere umfasst der Begriff "Grossdieselmotor" also auch solche Dual-Fuel oder Multi-Fuel Grossmotoren, die ausser im Dieselbetrieb auch noch in einem anderen Betrieb, beispielsweise dem Otto-Betrieb, betreibbar sind.

Grossmotoren werden häufig in Kreuzkopfbauart ausgestaltet und umfassen dann typischerweise drei grosse Baugruppen, nämlich eine Grundplatte, die neben einem Lagersattel mit Kurbelwellenhauptlager zur Aufnahme der Kurbelwelle transversale Stützelemente aufweist. Getrennt durch eine Bodenplatte, ist auf der Grundplatte ein sogenannter Ständer angeordnet. Der Ständer umfasst entsprechend der Anzahl der Zylinder des Grossdieselmotors mehrere Stützkörper, die jeweils zwei senkrecht verlaufende Gleitflächen zur Führung zweier benachbarter Kreuzköpfe aufweisen, die über Schubstangen mit der Kurbelwelle verbunden sind. Nach oben hin wird der Ständer mit einem Deckblech abgedeckt, welches gleichzeitig den Boden der Zylindersektion bildet, in welcher die Zylinderliner der Zylinder in einer longitudinalen Richtung nebeneinander angeordnet sind.

Bei einem längsgespülten Grossmotor hat typischerweise jeder Zylinderliner Spülluftöffnungen, die am unteren Ende des Zylinderliners vorgesehen sind. Jeder Zylinder hat mindestens ein Auslassventil zum Abführen von Abgasen, welches am oberen Ende des Zylinders, beispielsweise im Zylinderdeckel vorgesehen ist. Durch die Spülluftöffnungen wird dem Brennraum des Zylinders frische Spül- oder Ladeluft zugeführt, welche für den Verbrennungsprozess benötigt wird. Üblicherweise werden die Spülluftöffnungen des Zylinders durch die Bewegung des Kolbens geöffnet bzw. verschlossen. Wenn sich der Kolben während eines Arbeitszyklus und während seiner Abwärtsbewegung dem unteren Totpunkt nähert, so werden durch den Kolben die Spülluftöffnungen im Zylinderliner freigegeben, sodass die Spül- oder Ladeluft in den Zylinder einströmen kann. Bei der anschliessenden Aufwärtsbewegung des Kolbens verschliesst dieser dann die Spülluftöffnungen, sodass keine weitere Spülluft mehr in den Zylinder eingebracht werden kann.

Die Zylinderliner sind üblicherweise in der Zylindersektion in longitudinaler Richtung nebeneinander angeordnet und enden über dem Boden der Zylindersektion. Alle Zylinderliner enden in einem gemeinsamen Raum der Zylindersektion, der häufig auch als Kolbenunterraum bezeichnet wird. Der Kolbenunterraum wird nach unten hin durch den Boden der Zylindersektion begrenzt und nach oben hin durch die Unterseiten der Kolben bzw. durch Wandungen der Zylindersektion, das heisst der Kolbenunterraum umfasst Volumina im Inneren der Zylinderliner sowie Volumina ausserhalb der Zylinderliner.

Durch den gemeinsamen Kolbenunterraum sind die Spülluftöffnungen aller derjenigen Zylinderliner, in denen sich der Kolben momentan oberhalb der Spülluftöffnungen befindet, strömungsverbunden, weil sie sich alle in dem gemeinsamen Kolbenunterraum und unterhalb des jeweiligen Kolbens befinden.

Üblicherweise seitlich neben dem gemeinsamen Kolbenunterraum ist mindestens ein Spülluftreceiver vorgesehen, der auch als Einlassreceiver bezeichnet wird. Der Spülluftreceiver erstreckt sich typischerweise in longitudinaler Richtung entlang aller Zylinder und enthält die Spül- oder Ladeluft. Die Spülluft wird von einem Turbolader über einen Ladeluftkühler in den Spülluftreceiver eingespeist und steht dort unter einem einstellbaren Ladedruck zur Verfügung. Der Spülluftreceiver steht über mindestens eine, typischerweise aber mehrere Strömungsverbindungen mit dem gemeinsamen Kolbenunterraum in Verbindung, sodass die Spülluft in den jeweiligen Zylinderliner einströmen kann, sobald der jeweilige Kolben bei seiner Abwärtsbewegung die Spülluftschlitze freigibt. Bei der anschliessenden Aufwärtsbewegung verschliesst der Kolben dann die Spülluftschlitze wieder, sodass keine weitere Spülluft mehr in den Zylinder einströmen kann und der Kompressionsprozess beginnt, sobald das Auslassventil dieses Zylinders geschlossen ist.

Durch die individuellen Kolbenbewegungen kann es zu Druckschwankungen oder auch Pulsationen im Kolbenunterraum kommen, die sich auch in den Spülluftreceiver ausbreiten können. Dies hat häufig zur Folge, dass der Spülluftstom in einen individuellen Zylinderliner nicht vollständig gleichmässig ist, sondern Schwankungen unterliegt. Somit kann die Luftmasse, die pro Arbeitszyklus in den Zylinder eingebracht wird, nicht mit einer sehr hohen Genauigkeit eingestellt werden.

Insbesondere wenn der Grossmotor in einem Gasmodus betrieben wird, in welchem ein vorgemischtes Luft-Brennstoff-Gemisch im Brennraum fremdgezündet werden soll, kann diese Ungenauigkeit in der eingebrachten Spülluftmenge zu unkontrollierten oder anormalen Verbrennungsprozessen führen.

Ist der Gasanteil zu hoch, bzw. der Luftanteil zu niedrig, so wird das Luft-Brennstoff-Gemisch zu fett. Dies kann beispielsweise zu einer unerwünschten Selbstzündung des Luft-Brennstoff-Gemisches im Zylinder führen, was zu sehr hohen mechanischen Belastungen und zu stark erhöhten Emissionswerten führen kann. Ferner kann ein nicht korrektes Verhältnis im Luft-Brennstoffgemisch dazu führen, dass der fremdgezündete Verbrennungsprozess zu schnell abläuft (fast combustion), was ebenfalls zu hohen mechanischen Belastungen und hohen Emissionswerten führt. Ist der Luftanteil zu hoch, so ist das Luft-Brennstoff-Gemisch zu mager, und es kann zu Zündaussetzern kommen, was natürlich auch negativ im Hinblick auf einen effizienten und schadstoffarmen Betrieb des Motors ist.

Trägt man für eine vorgegebene Last des Grossdieselmotors das generierte Drehmoment gegen das Luft-Brennstoff-Verhältnis auf, so sind die Grenzen zwischen einer qualitativ hochwertigen Verbrennung und einer anormalen Verbrennung beispielsweise durch zwei Grenzkurven gegeben, nämlich eine Klopfgrenze (knocking limit) und eine Zündaussetzgrenze (misfiring-limit), wobei die qualitativ hochwertige Verbrennung zwischen diesen beiden Grenzkurven liegt.

Ausgehend von diesem Stand der Technik ist es daher eine Aufgabe der Erfindung, einen längsgespülten Kreuzkopf-Grossmotor vorzuschlagen, bei welchem die Menge der in den Zylinderliner eingebrachten Spülluft genauer kontrolliert und insbesondere genauer eingestellt werden kann, sodass der Grossmotor möglichst wirtschaftlich und mit geringen Emissionswerten betreibbar ist.

Der diese Aufgabe lösende Gegenstand der Erfindung ist durch die Merkmale des unabhängigen Patentanspruchs gekennzeichnet.

Erfindungsgemäss wird also ein längsgespülter Kreuzkopf-Grossmotor vorgeschlagen, mit einer Mehrzahl von Zylindern, von denen jeder einen Zylinderliner umfasst, mit einer Zylindersektion, die durch einen Boden begrenzt wird, und in welcher die Zylinderliner in einer longitudinalen Richtung nebeneinander angeordnet sind, wobei sich jeder Zylinderliner jeweils von einem ersten Ende, welches dem Boden zugewandt ist, bis zu einem zweiten Ende erstreckt, welches einem Brennraum des Zylinders zugewandt ist, wobei in jedem Zylinderliner jeweils ein hin und her bewegbar angeordneter Kolben vorgesehen ist, wobei benachbart zu dem ersten Ende jedes Zylinderliners jeweils Spülluftöffnungen in dem Zylinderliner vorgesehen sind, durch welche Spülluft aus einem Spülluftreceiver in den jeweiligen Zylinderliner einströmen kann, wobei für jeden Zylinder jeweils ein Kolbenunterraum vorgesehen ist, der einerseits von einer Unterseite des Kolbens des Zylinders begrenzt wird, und andererseits von dem Boden der Zylindersektion, wobei in der longitudinalen Richtung zwischen zwei benachbarten Kolbenunterräumen jeweils eine Trennwand vorgesehen ist, welche diese beiden Kolbenunterräume voneinander abgrenzt, und wobei jeder Kolbenunterraum über eine Strömungsverbindung mit dem Spülluftreceiver verbunden ist.

Ein wesentlicher Aspekt der vorliegenden Erfindung ist es, anstelle des gemeinsamen Kolbenunterraums, in welchem alle Zylinderliner enden, nun für jeden Zylinder einen zylinder-individuellen Kolbenunterraum vorzusehen, wobei zwischen zwei in longitudinaler Richtung benachbarten individuellen Kolbenunterräumen jeweils eine Trennwand vorgesehen ist, die es verhindert, dass die Spülluft aus einem Kolbenunterraum direkt in den in longitudinaler Richtung benachbarten Kolbenraum einströmen kann. Von diesen individuellen Kolbenunterräumen ist jeder über eine individuelle Strömungsverbindung mit dem Spülluftreceiver verbunden. Durch diese Massnahme ist es möglich, die Spülluftmenge, die pro Arbeitszyklus in den jeweiligen Zylinderliner einströmt, deutlich genauer einzustellen. Somit kann auch das Luft-Brennstoff-Verhältnis des Luft-Brennstoff-Gemisches wesentlich genauer justiert werden, wodurch ein qualitativ hochwertiger Verbrennungsprozess insbesondere auch in einem Gasmodus mit Fremdzündung ermöglicht wird.

Vorzugsweise ist in jeder Strömungsverbindung jeweils ein Flusskontrollelement vorgesehen, mit welchem ein Spülluftstrom durch die Strömungsverbindung einstellbar ist. Somit kann beispielsweise für jeden Zylinder individuell der freie Strömungsquerschnitt in der jeweiligen Strömungsverbindung eingestellt werden, sodass auch die Luftmenge, die pro Arbeitszyklus in den jeweiligen Zylinder eingebracht wird, besonders genau justierbar ist.

Gemäss einer bevorzugten Ausführungsform ist das Flusskontrollelement als eine Drossel oder ein Ventil, insbesondere als ein Klappenventil ausgestaltet.

Ferner ist es eine bevorzugte Massnahme, dass das Flusskontrollelement als Rückschlagvorrichtung ausgestaltet ist, welche ein Rückströmen der Spülluft in den Spülluftreceiver verhindert. Somit kann die Spülluft nur in einer Richtung strömen, nämlich in Richtung der individuellen Kolbenunterräume. Hierdurch können insbesondere Druckschwankungen im Spülluftreceiver oder Pulsationen zumindest reduziert werden.

Eine bevorzugte Ausführungsform ist es, das Flusskontrollelement als Flatterventil (reed valve) auszugestalten.

Besonders bevorzugt ist das Flusskontrollelement als ansteuerbares Ventil ausgestaltet, sodass der freie Strömungsquerschnitt in der jeweiligen Strömungsverbindung insbesondere auch während des Betriebs des Grossmotors eingestellt bzw. verändert werden kann. Somit ist es beispielsweise möglich, die pro Arbeitszyklus in den jeweiligen Zylinder einströmende Luftmenge an geänderte Umgebungsbedingungen, wie Lufttemperatur oder Luftfeuchtigkeit anzupassen, oder in Abhängigkeit von der Last, mit welcher der Grossmotor betrieben wird, einzustellen.

Vorzugsweise ist dann eine Kontrolleinrichtung vorgesehen, mit welcher der jeweilige Spülluftstrom in der Strömungsverbindung steuerbar oder regelbar ist. Im Falle einer Regelung kann als Regelgrösse beispielsweise das Luft-Brennstoff-Verhältnis vorgesehen sein oder ein anderer Parameter, der charakteristisch für den Verbrennungsprozess im jeweiligen Zylinder ist, so wie beispielsweise der Zünddruck, der Zylinderinnendruck oder auch der Zündsprung. Im Falle einer Steuerung können für solche oder andere Grössen beispielsweise Lookup-Tabellen vorgesehen sein, in denen die einzustellenden Werte in Abhängigkeit von einem Betriebsparameter oder mehreren Betriebsparametern hinterlegt sind. Somit ist es möglich den Spülluftstrom aus dem Spülluftreceiver in den Zylinder für jeden Zylinder individuell einzustellen.

Vorzugsweise ist der jeweilige Spülluftstrom in Abhängigkeit eines Betriebsparameters des Grossmotors steuerbar oder regelbar. Insbesondere geeignet als solche Betriebsparameter sind die Last, bei welcher der Grossmotor betrieben wird, und/oder das zu generierende Drehmoment, und/oder die Drehzahl des Grossmotors.

Eine weitere vorteilhafte Massnahme besteht darin, mindestens eine Verbindungsleitung vorzusehen, welche den Kolbenunterraum eines ersten Zylinders mit dem Kolbenunterraum eines zweiten Zylinders verbindet. Hierdurch können grössere Druckunterschiede in dem Kolbenunterraum des ersten Zylinders einerseits und dem Kolbenunterraum des zweiten Zylinders ausgeglichen werden. Somit ist es beispielsweise möglich, die Kolbenunterseite des einen Zylinders druckzuentlasten, um dadurch die Abwärtsbewegung des Kolbens in diesem Zylinder zu vereinfachen.

Vorzugsweise werden hierbei die beiden durch die Verbindungsleitung verbundenen individuellen Kolbenunterräume so gewählt, dass der Kolben des ersten Zylinders und der Kolben des zweiten Zylinders einen Kurbelwinkelunterschied von mindestens 90° aufweisen. Insbesondere können die Kolben des ersten und des zweiten Zylinders einen Kurbelwinkelunterschied von etwa 180° haben. So kann beispielsweise der Kolben des ersten Zylinders gerade im oberen Umkehrpunkt sein, wenn der Kolben des zweiten Zylinders gerade im unteren Umkehrpunkt ist.

Je nach Ausgestaltung kann es auch vorteilhaft sein, dass ein Kontrollelement vorgesehen ist, mit welchem der Fluss durch die Verbindungsleitung einstellbar ist.

Ferner kann es vorteilhaft sein, dass in der Verbindungsleitung ein Dämpfungselement vorgesehen ist, mit welchem Druckpulsationen dämpfbar sind.

Insbesondere bei solchen Ausgestaltungen, bei welchen die Flusskontrollelemente in den Strömungsverbindungen zwischen dem Spülluftreceiver und den individuellen Kolbenunterräumen als Rückschlagvorrichtungen ausgestaltet sind, kann es vorteilhaft sein, dass eine Kühleinrichtung für die Kolbenunterräume vorgesehen ist. Durch die Kompression der Luft in den jeweiligen Kolbenunterräumen, beispielsweise bei der Abwärtsbewegung des jeweiligen Kolbens, kann es zu einer Temperaturerhöhung der eingeschlossenen Luft kommen, die zu einer Temperaturerhöhung führt, welcher dann durch die Kühleinrichtung entgegengewirkt wird.

Im Speziellen kann der längsgespülter Kreuzkopf-Grossmotor als Zweitakt-Grossdieselmotor ausgestaltet sein.

Besonders bevorzugt ist der Grossmotor als Dual-Fuel Grossdieselmotor ausgestaltet, der in einem Flüssigmodus betreibbar ist, in welchem ein flüssiger Brennstoff zur Verbrennung in den Brennraum eingebracht wird, und der ferner in dem Gasmodus betreibbar ist, in welchem ein Gas als Brennstoff in den Brennraum eingebracht wird.

Weitere vorteilhafte Massnahmen und Ausgestaltungen der Erfindung ergeben sich aus den abhängigen Ansprüchen.

Im Folgenden wird die Erfindung anhand von Ausführungsbeispielen und anhand der Zeichnung näher erläutert. In der Zeichnung zeigen:
- Fig. 1:: eine schematische Schnittdarstellung eines Ausführungsbeispiels eines erfindungsgemässen längsgespülten Grossmotors in einem Schnitt senkrecht zur longitudinalen Richtung, und
- Fig. 2:: eine schematische Schnittdarstellung des Ausführungsbeispiels in einem Schnitt entlang der longitudinalen Richtung.

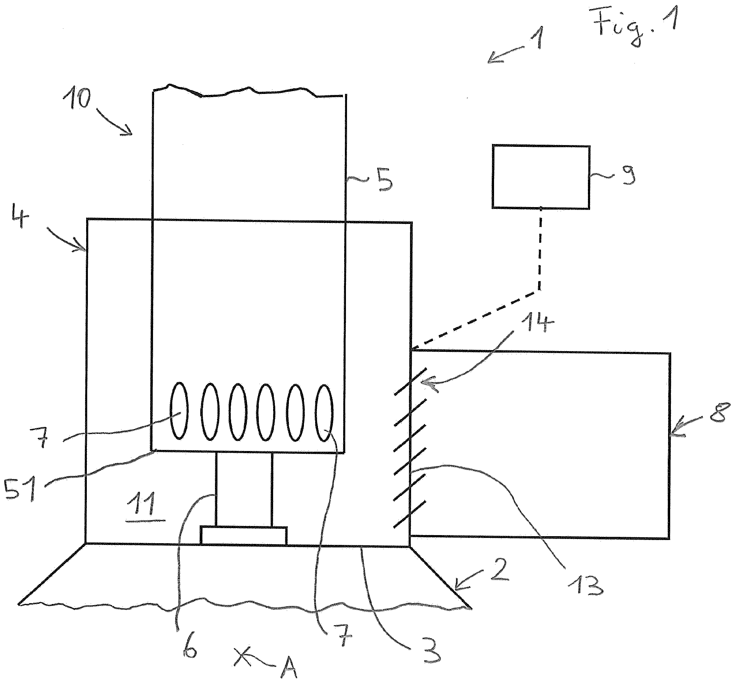

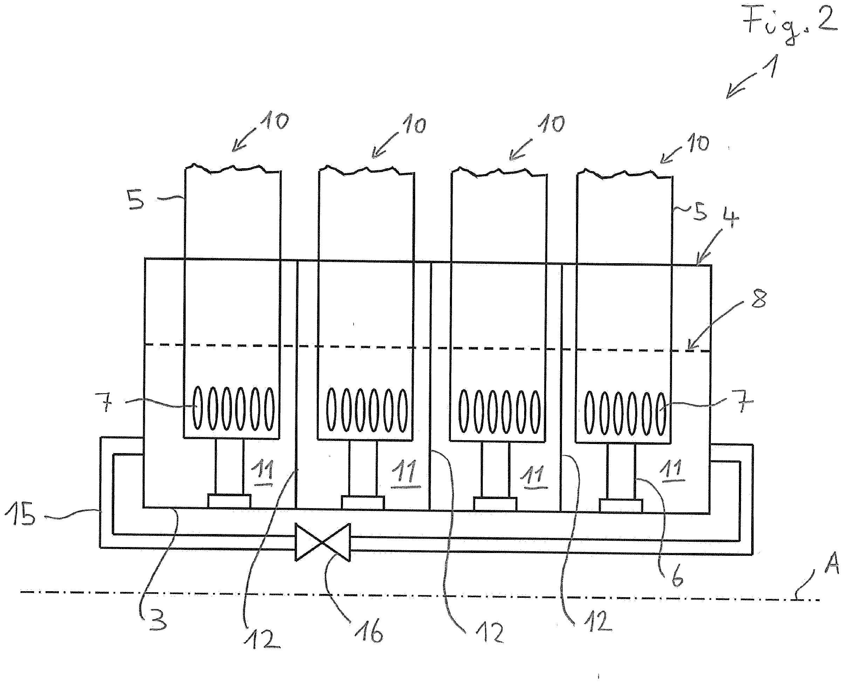

Fig. 1 zeigt in einer schematischen Schnittdarstellung ein Ausführungsbeispiel eines erfindungsgemässen längsgespülten Kreuzkopf-Grossmotors, der gesamthaft mit dem Bezugszeichen 1 bezeichnet ist. Der Schnitt ist senkrecht zu einer longitudinalen Richtung A, welche durch die Richtung festgelegt ist, in der sich die Kurbelwelle des Grossmotors 1 erstreckt. Fig. 2 zeigt das Ausführungsbeispiel in einer schematischen Schnittdarstellung in einem Schnitt entlang der longitudinalen Richtung A.

Der Grossmotor 1 umfasst mindestens einen, üblicherweise aber mehrere Zylinder 10, in denen der Verbrennungsprozess abläuft. In Fig. 2 sind mit beispielhaftem Charakter vier Zylinder 10 dargestellt. Jeder Zylinder 10 umfasst einen Zylinderliner 5, in welchem jeweils in an sich bekannter Weise ein Kolben (nicht dargestellt) angeordnet ist, der in Richtung der Zylinderachse zwischen einem oberen und einem unteren Umkehrpunkt hin- und her bewegbar angeordnet ist, und dessen Oberseite gemeinsam mit einem Zylinderdeckel (nicht dargestellt) einen Brennraum (nicht dargestellt) begrenzt. Die Zylinderachsen stehen jeweils senkrecht auf der longitudinalen Richtung A.

Mit dem Begriff "Grossmotor" sind solche Motoren gemeint, wie sie üblicherweise als Hauptantriebsaggregate für Schiffe oder auch im stationären Betrieb, z.B. zum Antrieb grosser Generatoren zur Erzeugung elektrischer Energie eingesetzt werden. Typischerweise haben die Zylinder 10 eines Grossmotors 1 jeweils einen Innendurchmesser (Bohrung), der mindestens etwa 200 mm beträgt.

Der Grossmotor 1 kann als Viertakt- oder als Zweitakt-Motor ausgestaltet sein. Insbesondere kann der Grossmotor 1 als Grossdieselmotor ausgestaltet sein, speziell als längsgespülter Zweitakt-Grossdieselmotor, der in Kreuzkopfbauart ausgestaltet ist.

Mit dem Begriff "Grossdieselmotor" sind dabei solche Grossmotoren 1 gemeint, die in einem Dieselbetrieb betreibbar sind. Der Dieselbetrieb ist im idealisierten Grenzfall ein Gleichdruckprozess (Gleichdruckverbrennung), der auf einer Diffusionsverbrennung basiert. Im Dieselbetrieb erfolgt die Verbrennung des Brennstoffs üblicherweise nach dem Prinzip der Selbstzündung. Im Rahmen dieser Anmeldung sind mit dem Begriff "Grossdieselmotor" auch solche Grossmotoren 1 gemeint, die ausser im Dieselbetrieb alternativ auch in einem Ottobetrieb betrieben werden können. Der Ottobetrieb ist im idealisierten Grenzfall ein Gleichraumprozess (Gleichraumverbrennung), bei welchem die Verbrennung typischerweise nach dem Prinzip der Fremdzündung des Brennstoffs erfolgt. Auch ist es möglich, dass der Grossdieselmotor in Mischformen aus dem Dieselbetrieb und dem Ottobetrieb betrieben werden kann.

Selbstverständlich umfasst der Begriff "Grossmotor" auch solche Motoren, die als Gasmotoren ausgestaltet sind. Diese Gasmotoren sind nur für den reinen Gasbetrieb ausgestaltet, das heisst, sie werden nur mit einem gasförmigen Brennstoff, z. B. einem Erdgas, betrieben. Beispielsweise kann ein Gasmotor so ausgestaltet sein, dass sein Betrieb dem Betrieb eines Dual-Fuel Motors im Gasmodus entspricht.

Ferner wird mit dem Begriff "fremdgezündeter Brennstoff" ein solcher Brennstoff bezeichnet, der bestimmungsgemäss durch Fremdzündung im

Zylinder 10 verbrennt, bei welchem also bestimmungsgemäss eine Selbstzündung vermieden werden soll. Im Unterschied dazu wird mit einem "selbstzündenden Brennstoff ein solcher Brennstoff bezeichnet, der bestimmungsgemäss durch Selbstzündung im Zylinder 10 verbrennt, also beispielsweise Schweröl oder Dieselbrennstoff.

Als "flüssiger Brennstoff" wird ein Brennstoff bezeichnet, der im flüssigen Zustand in den Zylinder 10 eingebracht wird. Als "gasförmiger Brennstoff" wird ein Brennstoff bezeichnet, der im gasförmigen Zustand in den Zylinder 10 eingebracht wird.

Bei der folgenden Beschreibung der Erfindung wird mit beispielhaftem Charakter auf den für die Praxis wichtigen Fall eines Grossdieselmotors 1 Bezug genommen, der als längsgespülter Kreuzkopf-Zweitakt-Grossdieselmotor 1 ausgestaltet ist, und der als Hauptantriebsaggregat eines Schiffes verwendet wird. Dieser Grossdieselmotor 1 kann beispielsweise aber nicht notwendigerweise als Dual-Fuel Grossdieselmotor ausgestaltet sein, sodass er mit zwei unterschiedlichen Brennstoffen betreibbar ist, z. B. mit einem flüssigen Brennstoff wie Schweröl und mit einem gasförmigen Brennstoff, z. B. Erdgas. Der Dual-Fuel Grossdieselmotor 1 kann während des Betriebs vom Verbrennen des ersten Brennstoffs auf das Verbrennen des zweiten Brennstoffs umgeschaltet werden und umgekehrt.

Es versteht sich, dass die Erfindung nicht auf diesen Typ von Grossdieselmotor und auf diese Verwendung beschränkt ist, sondern längsgespülte Grossmotoren 1 im Allgemeinen betrifft. Dabei ist es auch möglich, dass der Grossmotor 1 nur für die Verbrennung eines einzigen Brennstoffs ausgestaltet ist. Der Grossmotor 1 kann beispielsweise als Gasmotor ausgestaltet sein, der nur für den Betrieb mit einem Gas als Brennstoff ausgestaltet ist. Auch ist es möglich, dass der Grossmotor 1 als Multi-Fuel Grossmotor ausgestaltet ist, der mit einem ersten Brennstoff betrieben werden kann, und der mit mindestens einem zweiten Brennstoff betrieben werden kann, der von dem ersten Brennstoff verschieden ist. Natürlich kann der Grossmotor 1 auch für die Verbrennung von mehr als zwei Brennstoffen ausgestaltet ist.

Der Grossdieselmotor 1 ist in der Kreuzkopfbauart ausgestaltet und umfasst drei grosse Gehäusesegmente, die den Rahmen des Grossmotors 1 bilden. Auf einer Grundplatte (nicht dargestellt), die neben einem Lagersattel mit Kurbelwellenhauptlager zur Aufnahme einer Kurbelwelle transversale Stützelemente aufweist, ist, getrennt durch eine Bodenplatte (nicht dargestellt), ein sogenannter Ständer 2 angeordnet. Der Ständer 2 umfasst entsprechend der Anzahl der Zylinder des Grossdieselmotors 1 mehrere Stützkörper, die jeweils zwei senkrecht verlaufende Gleitflächen zur Führung zweier benachbarter Kreuzköpfe, die über Schubstangen mit der Kurbelwelle verbunden sind, aufweisen. Dabei werden jeweils zwei gegenüberliegende senkrecht verlaufende Gleitflächen durch eine Mittelwand zusätzlich abgestützt.

Die einzelnen Stützkörper sind in der Regel durch ein gemeinsames Deckblech miteinander verbunden, welches den Boden 3 einer Zylindersektion 4 bildet. Die Zylindersektion 4 umfasst die Zylinder 10 mit den Zylinderlinern 5, welche in der longitudinalen Richtung A nebeneinander angeordnet sind. Die Grundplatte, der Ständer 2 und die Zylindersektion 4 werden dabei durch Zuganker (nicht dargestellt) miteinander verbunden, indem die Zuganker in oder an der Grundplatte unter erheblicher Vorspannung verschraubt werden.

Die Kolben jedes Zylinders 10 sind jeweils ist in an sich bekannter Weise über eine Kolbenstange 6 mit einem Kreuzkopf (nicht dargestellt) verbunden, welcher über eine Schubstange (nicht dargestellt) mit der Kurbelwelle (nicht dargestellt) verbunden ist, sodass die Bewegung jedes Kolbens über die Kolbenstange 6, den Kreuzkopf und die Schubstange auf die Kurbelwelle übertragen wird, um diese zu drehen.

Die Zylinderliner 5 sind in der longitudinalen Richtung A nebeneinander angeordnet, wobei sich jeder Zylinderliner 5 jeweils von einem ersten Ende 51, welches dem Boden 3 zugewandt ist, bis zu einem zweiten Ende (nicht dargestellt) erstreckt, welches dem Brennraum des Zylinders 10 zugewandt ist. Benachbart zu dem ersten Ende 51 jedes Zylinderliners 5 sind jeweils mehrere Spülluftöffnungen 7, beispielsweise ausgestaltet als Spülluftschlitze, in dem Zylinderliner 5 vorgesehen, durch welche Spülluft aus einem Spülluftreceiver 8 in den jeweiligen Zylinderliner 5 einströmen kann.

Die Spülluftöffnungen 7 werden jeweils durch die Bewegung des Kolbens im Zylinder 10 periodisch verschlossen und geöffnet, sodass die von einem Turbolader (nicht dargestellt) in dem Spülluftreceiver 8 unter dem Ladedruck bereitgestellte Spülluft durch die Spülluftöffnungen 7 in den jeweiligen Zylinder 10 einströmen kann, solange diese durch die Stellung des Kolbens in Strömungsverbindung mit dem Brennraum des jeweiligen Zylinders 10 stehen. Dies ist der Fall, wenn sich der jeweilige Kolben im Bereich seines unteren Umkehrpunkts befindet.

In einem Zylinderdeckel (nicht dargestellt), welcher die zweiten Enden der Zylinderliner 5 umfasst, ist für jeden Zylinder 10 mindestens eine Brennstoffeinspritzdüse (nicht dargestellt), vorgesehen, die beispielsweise bezüglich des jeweiligen Zylinders 10 zentral im Zylinderdeckel angeordnet ist und durch welche im Flüssigmodus der flüssige Brennstoff in den Brennraum des jeweiligen Zylinders 10 eingebracht wird.

Es ist ferner ein Gaszuführsystem (nicht dargestellt) vorgesehen, mit welchem im Gasmodus das Gas als Brennstoff in den Zylinder 10 einbringbar ist. Das Gaszuführsystem ist vorzugsweise als Niederdrucksystem ausgestaltet, welches das als Brennstoff dienende Gas mit einem Druck von höchsten 50 bar (5 MPa), vorzugsweise höchstens 20 bar (2 MPa) in den jeweiligen Zylinder 10 einbringt. Das Gaszuführsystem umfasst mindestens eine, vorzugsweise mehrere Gaseinlassdüse(n), welche an oder in der Wandung des jeweiligen Zylinderliners 5 angeordnet ist (sind). Im Gasmodus wird das Gas mittels des Gaszuführsystems in den jeweiligen Zylinder 10 eingebracht, vermischt sich dort mit der Spülluft und wird durch die Aufwärtsbewegung des Kolbens komprimiert. Hierdurch entsteht im Brennraum ein vorgemischtes Luft-Brennstoff-Gemisch, welches dann zu einem vorgebbaren Zeitpunkt bzw. bei einem vorgebbaren Kurbelwinkel fremdgezündet wird. Die Fremdzündung erfolgt vorzugsweise, indem im richtigen Moment eine kleine Menge flüssiger oder gasförmiger Brennstoff in den Brennraum des Zylinders 10 oder in eine Vorkammer (nicht dargestellt) eingespritzt wird, sodass sich der flüssige oder gasförmige Brennstoff im Brennraum oder in der Vorkammer selbstentzündet, was dann zur Zündung des Luft-Gas-Gemisches im Brennraum führt. Es können in an sich bekannter Weise mehrere Vorkammern vorgesehen sein, von denen jede mit dem Brennraum strömungsverbunden ist. Wir dann der selbstzündende Brennstoff in jede diese Kammern eingebracht, so kann das Luft-Brennstoff-Gemisch im Brennraum an verschiedenen Stellen fremdgezündet werden.

Der weitere Aufbau und die einzelnen Komponenten des Grossdieselmotors wie beispielsweise Einzelheiten des Einspritzsystems, das Gaswechselsystem, das Abgassystem oder das Turboladersystem für die Bereitstellung der Spül- bzw. Ladeluft, sowie das Kontroll- und Steuerungssystem für einen Grossdieselmotor sind dem Fachmann sowohl für die Ausgestaltung als Zweitaktmotor als auch für die Ausgestaltung als Viertaktmotor hinlänglich bekannt und bedürfen daher hier keiner weiteren Erläuterung.

Das Kontroll- und Steuerungssystem ist in modernen Grossdieselmotoren ein elektronisches System, mit welchem sich üblicherweise alle Motor- oder Zylinderfunktionen, insbesondere die Einspritzung (Beginn und Ende der Einspritzung), die Einbringung des gasförmigen Brennstoffs und die Betätigung der Auslassventile, einstellen oder steuern bzw. regeln lassen. Im hier beschriebenen Ausführungsbeispiel umfasst das Kontroll- und Steuerungssystem eine Kontrollvorrichtung 9, mit welcher die Spülluftzufuhr in die Zylinder 10 gesteuert oder geregelt werden kann, was noch näher beschrieben wird.

Für jeden Zylinder 10 ist zylinder-individuell ein Kolbenunterraum 11 vorgesehen, der einerseits durch die dem Brennraum abgewandte Unterseite des Kolbens dieses Zylinders 10 und andererseits durch den Boden 3 der Zylindersektion 4 begrenzt wird. Dieser Kolbenraum 11 umfasst sowohl ein Volumen, welches innerhalb des zugehörigen Zylinderliners 5 angeordnet ist, nämlich das Volumen unterhalb des jeweiligen Kolbens, als auch ein Volumen, welches ausserhalb des Zylinderliners 5 angeordnet ist und durch den Boden 3 der Zylindersektion 4, die Wandungen der Zylindersektion 4, sowie eine Trennwand 12 bzw. zwei Trennwände 12 begrenzt wird. In der longitudinalen Richtung A gesehen, ist jeweils zwischen den Kolbenunterräumen 11 zweier benachbarter Zylinder 10 eine Trennwand 12 vorgesehen, welche diese beiden Kolbenunterräume 11 voneinander abgrenzt, sodass ein direktes Strömen der Luft aus einem der Kolbenunterräume in longitudinaler Richtung A in den oder die benachbarten Kolbenunterraum 11 bzw. Kolbenunterräume 11 nicht möglich ist. Somit hat jeder Zylinder 10 seinen individuellen Kolbenunterraum 11, der in longitudinaler Richtung A durch eine Trennwand 12 oder durch zwei Trennwände 12 begrenzt wird. Jeder individuelle Kolbenunterraum 11 hat vorzugsweise ein Volumen, das jeweils kleiner ist als das Volumen des Spülluftreceivers 8

Die Öffnungen, die bei bekannten längsgespülten Kreuzkopf-Grossmotoren in longitudinaler Richtung gesehen zwischen den ersten Enden benachbarter Zylinderliner vorgesehen sind, sind bei dem erfindungsgemässen Grossmotor nicht mehr vorgesehen. Jeder Zylinder hat seinen eigenen separaten Kolbenunterraum 11, der durch die Trennwände 12 in longitudinaler Richtung gesehen von seinen benachbarten Kolbenunterräumen 11 abgegrenzt ist.

Jeder der zylinder-individuellen Kolbenunterräume 11 ist jeweils über eine separate Strömungsverbindung 13 mit dem Spülluftreceiver 8 verbunden, sodass die Spülluft in den Brennraum des zugehörigen Zylinders 10 einströmen kann, wenn der Kolben die Spülluftöffnungen 7 diese Zylinderliners 5 freigibt.

Besonders bevorzugt ist in jeder Strömungsverbindung 13 jeweils ein Flusskontrollelement 14 vorgesehen, mit welchem der Spülluftstrom bzw. der Spülluftfluss durch die jeweilige Strömungsverbindung 13 einstellbar. Mit dem Spülluftstrom ist dabei die Menge der Spülluft gemeint, die pro Zeit durch die Strömungsverbindung 13 hindurch strömt.

Die Flusskontrollelemente 14 können als Drossel, als Durchflussventil, als Klappenventil, als Schieberventil oder als sonstige Vorrichtung ausgestaltet sein, mit welcher der Spülluftstrom durch die Strömungsverbindung 13 eingestellt werden kann. Somit ist es möglich, durch die Einstellung der jeweiligen Flusskontrollelemente 14 den freien Strömungsquerschnitt in der jeweiligen Strömungsverbindung 13 zylinder-individuell zu justieren.

Auch kann es vorteilhaft sein, wenn die Flusskontrollelemente 14 als Rückschlagvorrichtung ausgestaltet sind, sodass die Spülluft nur in Richtung des jeweiligen Kolbenunterraums 11 durch die Strömungsverbindung 13 strömen kann, nicht aber in umgekehrter Richtung aus dem jeweiligen Kolbenunterraum 11 in den Spülluftreceiver 8. Dazu können die Flusskontrollelemente 14 beispielsweise als Rückschlagventile und insbesondere als Flatterventile (reed valve) ausgestaltet sein. Die Flusskontrollelemente 14 können beispielsweise auch als Teller- oder Sitzventil (poppet valve), oder als Plattenventil (plate valve) ausgestaltet sein.

Das Verhindern eines Rückströmens aus den Kolbenunterräumen 11 in den Spülluftreceiver 8 kann gegebenenfalls zu einer Temperatur- und/oder einer Druckerhöhung in einem oder mehreren der individuellen Kolbenunterräume führen. Daher kann es vorteilhaft sein, eine Kühleinrichtung vorzusehen, welche mittels eines fluiden Wärmeträgers, beispielsweise Luft oder Wasser oder ein Kühlöl, Wärme aus den Kolbenunterräumen abführen kann.

Die Flusskontrollelemente 14 sind vorzugsweise als einstellbare Flusskontrollelemente 14 ausgestaltet, sodass der für die Spülluft in der jeweiligen Strömungsverbindung 13 freie Strömungsquerschnitt jeweils einstellbar und veränderbar ist. Dazu können die Flusskontrollelemente als manuell einstellbare Flussleitelemente 14 ausgestaltet sein, oder aber auch als ansteuerbare Ventile, die beispielsweise elektrisch, hydraulisch oder pneumatisch angesteuert werden können.

Zur Ansteuerung der Flusskontrollelement 14 ist die Kontrollvorrichtung 9 vorgesehen, die für eine Steuerung oder für eine Regelung der Spülluftströme durch die Spülluftverbindungen 13 ausgestaltet ist. Hierdurch kann der Spülluftstrom in jeden der Zylinder 10 besonders genau eingestellt werden.

Diese Einstellung kann beispielsweise bei einer Steuerung anhand von fest vorgegebenen Daten für Betriebsparameter erfolgen, die in der Kontrolleinrichtung 9 hinterlegt sind, beispielsweise in Form einer Lookup-Tabelle.

Natürlich ist es auch möglich, die Kontrolleinrichtung 9 für eine Regelung der Spülluftströme auszugestalten, wobei für eine Regelgrösse ein Soll-Wert vorgegeben wird, der mit einem messtechnisch ermittelten Ist-Wert verglichen wird, und dann eine Stellgrösse so verändert wird, sodass der Ist-Wert auf den Sollwert geführt wird.

Als Regelgrösse sind insbesondere solche Betriebsgrössen des Grossmotors 1 geeignet, die charakteristisch für den Verbrennungsprozess im Zylinder 10 bzw. für die Qualität des Verbrennungsprozesses sind. Beispielsweise ist das Luft-Brennstoff-Verhältnis als Regelgrösse geeignet, oder der Zünddruck im jeweiligen Zylinder, oder der Zylinderinnendruck oder auch der Zündsprung.

Natürlich sind auch solche Ausgestaltungen möglich, bei welchen sowohl in einer Lookup-Tabelle gespeicherte Daten als auch messtechnisch ermittelte Grössen für das Justieren der Spülluftströme in die jeweiligen Zylinder 10 herangezogen werden.

Auch ist es möglich, jedes Flussleitelement 14 jeweils als eine Tür auszugestalten bzw. in eine Tür zu integrieren, sodass ein freier Zugang zu den Unterseiten der Kolben, beispielsweise für Wartungsarbeiten, gewährleistet ist.

Ferner kann es vorteilhaft sein, mindestens eine Verbindungsleitung 15 vorzusehen, welche den Kolbenunterraum 11 eines ersten Zylinders 10 mit dem Kolbenunterraum eines zweiten Zylinders 10 verbindet. Diese Verbindungsleitung. Diese Verbindungsleitung 15 dient in erster Linie dazu, für einen Druckausgleich zwischen diesen beiden Kolbenunterräumen zu sorgen. Herrscht beispielsweise im Kolbenunterraum 11 des ersten Zylinders ein hoher Druck, welcher der Abwärtsbewegung des Kolbens entgegenwirkt, so kann durch die Verbindungsleitung 15 dieser Druck abgebaut werden, wenn im Kolbenunterraum des zweiten Zylinders 10 ein kleinerer Druck herrscht.

Im Hinblick auf diesen Druckausgleich werden der erste Zylinder und der zweite Zylinder 10, deren Kolbenunterräume durch die Verbindungsleitung 15 verbunden sind, derart gewählt, dass der Kolben des ersten Zylinders und der Kolben des zweiten Zylinders 10 einen Kurbelwinkelunterschied von mindestens 90° haben. Besonders bevorzugt werden der erste Zylinder und der zweite Zylinder 10, deren Kolbenunterräume durch die Verbindungsleitung 15 verbunden sind, derart gewählt, dass der Kolben des ersten Zylinders und der Kolben des zweiten Zylinders 10 einen möglichst grossen Kurbelwinkelunterschied also beispielsweise von etwa 180° haben. Das heisst der Kolben des ersten Zylinders befindet sich im oberen Umkehrpunkt, wenn sich der Kolben des zweiten Zylinders im unteren Umkehrpunkt befindet und umgekehrt.

Jede Verbindungsleitung 15 kann beispielsweise als Rohrleitung oder als Kanal oder als Bohrung ausgestaltet sein.

Natürlich ist es auch möglich, für jede Verbindungsleitung 15 ein Kontrollelement 16 vorzusehen, mit welchem der Fluss durch die Verbindungsleitung 15 einstellbar ist. Jedes Kontrollelement 16 ist vorzugsweise als aktiv ansteuerbares Ventil ausgestaltet.

Ferner ist es möglich, in der Verbindungsleitung 15 ein Dämpfungselement (nicht dargestellt) vorzusehen, mit welchem Druckpulsationen gedämpft werden können.

Auch kann eine Kühlung (nicht dargestellt) für jede Verbindungsleitung 16 vorgesehen sein.

## Patentansprüche

1. Längsgespülter Kreuzkopf-Grossmotor mit einer Mehrzahl von Zylindern (10), von denen jeder einen Zylinderliner (5) umfasst, mit einer Zylindersektion (4), die durch einen Boden (3) begrenzt wird, und in welcher die Zylinderliner (5) in einer longitudinalen Richtung (A) nebeneinander angeordnet sind, wobei sich jeder Zylinderliner (5) jeweils von einem ersten Ende (51), welches dem Boden (3) zugewandt ist, bis zu einem zweiten Ende erstreckt, welches einem Brennraum des Zylinders (10) zugewandt ist, wobei in jedem Zylinderliner (5) jeweils ein hin und her bewegbar angeordneter Kolben vorgesehen ist, wobei benachbart zu dem ersten Ende (51) jedes Zylinderliners (5) jeweils Spülluftöffnungen (7) in dem Zylinderliner (5) vorgesehen sind, durch welche Spülluft aus einem Spülluftreceiver (8) in den jeweiligen Zylinderliner (5) einströmen kann, wobei für jeden Zylinder (10) jeweils ein Kolbenunterraum (11) vorgesehen ist, der einerseits von einer Unterseite des Kolbens des Zylinders (10) begrenzt wird, und andererseits von dem Boden (3) der Zylindersektion (4), **dadurch gekennzeichnet** das in der longitudinalen Richtung (A) zwischen zwei benachbarten Kolbenunterräumen (11) jeweils eine Trennwand (12) vorgesehen ist, welche diese beiden Kolbenunterräume (11) voneinander abgrenzt, und dass jeder Kolbenunterraum (11) über eine Strömungsverbindung (13) mit dem Spülluftreceiver (8) verbunden ist.

2. Längsgespülter Kreuzkopf-Grossmotor nach Anspruch 1, wobei in jeder Strömungsverbindung (13) jeweils ein Flusskontrollelement (14) vorgesehen ist, mit welchem ein Spülluftstrom durch die Strömungsverbindung (13) einstellbar ist.

3. Längsgespülter Kreuzkopf-Grossmotor nach Anspruch 2, wobei das Flusskontrollelement (14) als eine Drossel oder ein Ventil, insbesondere als ein Klappenventil ausgestaltet ist.

4. Längsgespülter Kreuzkopf-Grossmotor nach einem der Ansprüche 2-3, wobei das Flusskontrollelement (14) als Rückschlagvorrichtung ausgestaltet ist, welche ein Rückströmen der Spülluft in den Spülluftreceiver (8) verhindert.

5. Längsgespülter Kreuzkopf-Grossmotor nach einem der Ansprüche 2-4, bei welchem das Flusskontrollelement (14) als Flatterventil ausgestaltet ist.

6. Längsgespülter Kreuzkopf-Grossmotor nach einem der Ansprüche 2-5, wobei das Flusskontrollelement (14) als ansteuerbares Ventil ausgestaltet ist.

7. Längsgespülter Kreuzkopf-Grossmotor nach Anspruch 6, mit einer Kontrolleinrichtgung (9), mit welcher der jeweilige Spülluftstrom in der Strömungsverbindung (13) steuerbar oder regelbar ist.

8. Längsgespülter Kreuzkopf-Grossmotor nach Anspruch 7, wobei der jeweilige Spülluftstrom in Abhängigkeit eines Betriebsparameters des Grossmotors steuerbar oder regelbar ist.

9. Längsgespülter Kreuzkopf-Grossmotor nach einem der vorangehenden Ansprüche, bei welchem mindestens eine Verbindungsleitung (15) vorgesehen ist, welche den Kolbenunterraum (11) eines ersten Zylinders (10) mit dem Kolbenunterraum (11) eines zweiten Zylinders (10) verbindet.

10. Längsgespülter Kreuzkopf-Grossmotor nach Anspruch 9, wobei der Kolben des ersten Zylinders (10) und der Kolben des zweiten Zylinders (10) einen Kurbelwinkelunterschied von mindestens 90° aufweisen.

11. Längsgespülter Kreuzkopf-Grossmotor nach einem der Ansprüche 9-10, wobei ein Kontrollelement (16) vorgesehen ist, mit welchem der Fluss durch die Verbindungsleitung 15 einstellbar ist.

12. Längsgespülter Kreuzkopf-Grossmotor nach einem der Ansprüche 9-11, wobei in der Verbindungsleitung (15) ein Dämpfungselement vorgesehen ist, mit welchem Druckpulsationen dämpfbar sind.

13. Längsgespülter Kreuzkopf-Grossmotor nach einem der vorangehenden Ansprüche, wobei eine Kühleinrichtung für die Kolbenunterräume vorgesehen ist.

14. Längsgespülter Kreuzkopf-Grossmotor nach einem der vorangehenden Ansprüche ausgestaltet als Zweitakt-Grossdieselmotor.

15. Längsgespülter Kreuzkopf Grossmotor nach einem der vorrangehenden Ansprüche, ausgestaltet als Dual-Fuel Grossdieselmotor, der in einem Flüssigmodus betreibbar ist, in welchem ein flüssiger Brennstoff zur Verbrennung in den Brennraum eingebracht wird, und der ferner in dem Gasmodus betreibbar ist, in welchem ein Gas als Brennstoff in den Brennraum eingebracht wird.
